(19) Europäisches Patentamt
European Patent Office
Office européen des brevets

(11) Publication number: **0 272 022 B1**

(12) **EUROPEAN PATENT SPECIFICATION**

(45) Date of publication of patent specification: **16.06.93**

(51) Int. Cl.5: **C08F 2/08**, C08F 246/00, C08F 220/28, C09D 201/00

(21) Application number: **87310666.0**

(22) Date of filing: **03.12.87**

(54) **Non-aqueous polymeric dispersion compositions and methods for preparing them.**

(30) Priority: **15.12.86 US 941443**

(43) Date of publication of application:
**22.06.88 Bulletin 88/25**

(45) Publication of the grant of the patent:
**16.06.93 Bulletin 93/24**

(84) Designated Contracting States:
**AT BE CH DE ES FR GB IT LI LU NL SE**

(56) References cited:
**EP-A- 0 008 156**
**EP-A- 0 120 563**
**EP-A- 0 126 528**
**US-A- 3 266 930**

(73) Proprietor: **ROHM AND HAAS COMPANY**
**Independence Mall West**
**Philadelphia Pennsylvania 19105(US)**

(72) Inventor: **Chung, Chao-Jun**
**2220 Rebecca Drive**
**Hatfield Pennsylvania 19440(US)**
Inventor: **Sperry, Peter Reeves**
**49 Woodview Drive**
**Doylestown Pennsylvania 18901(US)**
Inventor: **Walter, Frederick Herbert**
**1375 Downing Drive**
**Hatfield Pennsylvania 19440(US)**

(74) Representative: **Angell, David Whilton et al**
**ROHM AND HAAS (UK) LTD. European Operations Patent Department Lennig House 2 Mason's Avenue**
**Croydon CR9 3NB (GB)**

EP 0 272 022 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention is concerned with non-aqueous dispersion compositions which are suitable for application to metallic substrates.

Non-aqueous dispersions (NAD) are well known in the art and have found some utility in coatings and adhesives applications. These NAD's are typically prepared from acrylic- and methacrylic-acid esters in organic solvents such as pentane, hexane, heptane, isoparaffins, cycloparaffins and commercial hydrocarbon mixtures, such as mineral spirits, naphthol spirits and petroleum ether. The preparation of NAD's in general is discussed in Barrett, Dispersion Polymerization in Organic Media, John Wiley & Sons (1975). Preparation of NAD's is further described in US-A-3,514,500; US-A-3,607,821; and US-A-3,66,710 and GB-A-1,268,692.

NAD's have several advantages over solution, suspension and emulsion polymer compositions. Since NAD's are dispersions of polymer in a non-solubilizing solvent, rather than solutions of dissolved polymer, NAD's can have much higher application solids at equal or higher molecular weight to ensure good physical properties of the dried NAD films. The higher solids content of NAD's results in reduced environmental pollution and less wastage of solvent in comparison to solution polymer compositions. Additionally the higher solids content of NAD's result in ease of application of thick, "high film build" coatings for providing maximum protection for substrates. NAD's also have advantages over waterborne suspension and emulsion polymer compositions, especially when applied under humid or cold conditions.

Despite their many advantages, NAD's known in the prior art suffer from poor filming and adhesion properties when applied to metallic substrates. Thus, a need exists for NAD's which have good adhesion to metals, especially when applied and dried at ambient temperature.

It is disclosed in US-A-3,037,955 that improvement in adhesion to metal is obtained when small amounts of free acids are added to solutions of vinyl copolymers. US-A-3,266,930 discloses compositions of copolymers prepared by granular, bulk, emulsion, suspension or solution polymerization and containing copolymerized acids, such as $\beta$- acryloxypropionic acid (AOPA) and methacryloxypropionic acid (MOPA) which have improved adhesion to metal. However, the US-A-3,266,930 does not teach or suggest that AOPA is useful as an adhesion promoter in non-aqueous dispersions; nor that NAD's containing AOPA can form tough coherent films at ambient temperature without the necessity of baking. US-A-4,180,598 discloses polymeric coating compositions containing AOPA as free monomer which are radiation curable to yield films with good adhesion to metal.

The exterior durability and particle size are important parameters of non-aqueous dispersions. The durability upon exposure to the elements of NAD's of a given glass transition temperature will be greater in compositions based on methyl methacrylate (MMA) and non-polar monomers, such as butyl acrylate (BA), than in compositions based on methyl methacrylate and more polar, water sensitive monomers like ethyl acrylate (EA). However, a major disadvantage of using non-polar monomers such as butyl acrylate and 2-ethylhexyl acrylate (2-EHA) in non-aqueous dispersions is that a very large increase in particle size results. When the particle size of a non-aqueous dispersion gets too large (i.e., greater than about 450 nanometers) various problems are encountered that make these dispersions unsuitable in many practical applications. For example, non-aqueous dispersions having an average particle size greater than about 450 nanometers are unstable as dispersions because the polymer particles settle very rapidly. Also, the gloss of pigmented coatings decreases when the particle size gets too large.

Thus, a need exists for non-aqueous dispersions which have high durability and a relatively small particle size for good dispersion stability in addition to good adhesion to metal. It has been surprisingly discovered that novel NAD's having high durability and small particle size can be achieved by carrying out the dispersion polymerization of specific comonomers in a straight-chain, $C_8$ to $C_{18}$ hydrocarbon medium and an amphipathic dispersant.

Applicants have discovered that metal adhesion of non-aqueous polymeric dispersions can be greatly improved by copolymerizing into the polymers low levels of $\beta$-acryloxypropionic acid and mixtures thereof with its homologs. When this feature is introduced into preferred NAD's containing butyl acrylate and prepared in $C_8$-$C_{18}$ straight-chain hydrocarbon solvents, applicants obtain good metal adhesion of these durable, stable, small particle size dispersions.

It is the object of this invention to provide non-aqueous, dispersion-polymerized, polymer compositions having improved adhesion to metal substrates. It is a further object of this invention to provide NAD's having high adhesion to metal and film forming properties at ambient temperature. It is an even further object of the invention to provide NAD's which have improved durability and dispersion stability.

According to a first aspect of the present invention there is provided a method of preparing a non-aqueous polymeric dispersion comprising a dispersion-polymerized copolymer of ethylenically-unsaturated

monomer(s) containing copolymerized therein from 0.5 to 10 percent, by weight of said copolymer, of one or more adhesion promoter(s) having the chemical formula:

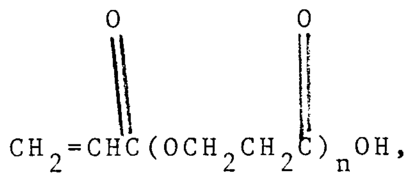

wherein n ranges from 1 to 6 comprising polymerising the monomer mixture of the ethylenically unsaturated monomer(s) and the adhesion promoter(s) in the presence of an amphipathic dispersant or dispersant precursor and in the presence of a solvent medium containing one or more straight-chain hydrocarbons having an average chain length of 8 to 18 carbon atoms.

According to a second aspect of the present invention there is provided the use of a dispersion prepared by a method according to the first aspect of the present invention in or as a coating or adhesive composition.

The above formula is hereafter referred to as "AOPA".

The use of copolymerized AOPA as an adhesion promoter in non-aqueous polymer dispersions is novel.

The invention results in NAD compositions having improved adhesion to metal substrates, durability and dispersion stability and which can form films at ambient temperatures. Applicants have confirmed the poor metal adhesion of NAD's known in the art, and they found that copolymerization therein of a variety of carboxylic acid monomers, such as acrylic acid, methacrylic acid and phthalic acid derivatives, confer virtually no improvement in adhesion of NAD's to metal, despite their known enhancement of metal adhesion in emulsion and solution polymeric compositions. Thus, it was especially surprising to discover that NAD's containing AOPA copolymerized therein resulted in a dramatic improvement in metal adhesion even when applied and dried at ambient temperatures. Applicants hypothesize that the polymeric stabilizers required to synthesize and formulate NAD compositions are interfacially active at the substrate and prevent formation of a good adhesive bond between polymer and substrate, but the use of AOPA in NAD's overcomes this phenomenon.

The ethylenically-unsaturated monomers suitable for use in this invention can be any of the monomers known in the art containing a >C = C< group, such as monoolefinic hydrocarbons, halogenated monoolefinic hydrocarbons, esters of organic and inorganic acids, organic nitriles, carboxylic acid monomers, monomeric dienes and monomeric ketones. A more complete description of these monomers may be found in US-A-3,037,963. Preferably the monomers comprise a) from 75 to 100 weight percent of monomers selected from methyl methacrylate, ethyl methacrylate, propyl methacrylate, butyl methacrylate, isobutyl methacrylate, butyl acrylate, isobutyl acrylate, ethyl acrylate, vinyl acetate, vinyl chloride, vinylidene chloride, acrylonitrile and methacrylonitrile, and b) from O to 25 weight percent monomers selected from styrene, alphamethylstyrene, vinyl toluene, 2-ethylhexyl acrylate, 2-ethyhexyl methacrylate, isodecyl acrylate, isodecyl methacrylate, lauryl acrylate and lauryl methacrylate.

Critical to this invention is the copolymerization into the copolymer of one or more adhesion promoter(s) having the chemical formula;

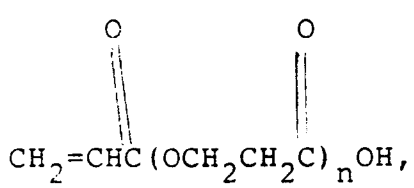

wherein n ranges from 1 to 6. An effective level of the copolymerized adhesion promoter is at least 0.5 percent based on the total weight of the copolymer. Preferably the level of adhesion promoter is from 0.5 to 10 percent by weight of the copolymer, more preferably from 1 to 8 percent.

The dispersion polymerization of the copolymers of this invention may be carried out following basic techniques which are well known and extensively described in the literature. Reference may be made, for example, to US-A-3,510,500 and US-A-3,666,710 for typical process and reaction conditions. The polymerization is carried out in the presence of an amphipathic dispersant or dispersant precursor; preferably the dispersant or dispersant precursor is a derivative of poly(12-hydroxystearic acid).

More preferably, the non-aqueous dispersions of this invention are polymerized from a monomer mixture containing a) at least about 40 weight percent $C_1$-$C_3$ alkyl methacrylate monomer(s); b) at least about 10 weight percent of comonomer(s) selected from the group consisting of butyl acrylate, isobutyl acrylate, butyl methacrylate, isobutyl methacrylate, and 2-ethylhexyl acrylate; c) 0.5 to 10 weight percent of said adhesion promoter(s); and d) 0 to about 50 weight percent of other ethylenically-unsaturated monomer(s), wherein the dispersed copolymer has a glass transition temperature from O °C to 70 °C as calculated by the Fox equation and an average particle size by volume less than about 450 nanometer. Most preferably the polymerization is carried out in the presence of a solvent medium containing about 60% or more by weight of a straight-chain hydrocarbon having an average chain length of 8 to 18 carbon atoms.

The $C_1$-$C_3$ alkyl methacrylate monomers are preferably selected from methyl methacrylate, ethyl methacrylate and propyl methacrylate. More preferably, the $C_1$-$C_3$ alkyl methacrylate is present at a level of at least about 60 weight percent of the monomer mixture. Methyl methacrylate is the most preferred $C_1$-$C_3$ alkyl methacrylate monomer for use in this invention.

Suitable comonomers b) for use in the more preferred embodiment of this invention are selected from butyl- and isobutyl- acrylate, butyl- and isobutyl-methacrylate, and 2-ethylhexyl acrylate. These comonomers are useful for imparting high durability and weatherability to the non-aqueous dispersions of this invention. The most preferred comonomer is butyl acrylate.

The monomer mixture used in preparing the more preferred NAD's of this invention may contain from O or up to about 50 weight percent of other free-radical-polymerizable monomers. These monomers can be any of the monomers known in the art and having ethylenic unsaturation such as, for example, one or more of ethyl acrylate, styrene, 2-hydroxyethyl acrylate, hydroxypropyl acrylate, acrylonitrile, methacrylonitrile, acrylamide, acrylic acid, methacrylic acid, itaconic acid, vinyl acetate and vinyl toluene. A more complete description of these monomers may be found in US-A-3,037,963.

Within the concentration ranges described above, the specific concentration of monomers in the monomer mixture can be determined such that the final polymer has a calculated glass transition temperature (Tg) from about 0 to 70 °C depending on he desired application. The Tg of the final copolymer can be calculated using the Fox equation:

$1/Tg$ (copolymer) = $W_{(a)}/Tg_{(a)} + W_{(b)}/Tg_{(b)} + \ldots$ where $W_{(a)}$ and $W_{(b)}$ are the weight fractions of components (a) and (b) and $Tg_{(a)}$ and $Tg_{(b)}$ are the glass transition temperatures for homopolymers (a) and (b), respectively. Glass transition temperatures for various homopolymers are available in many literature sources, including J. Brandrup and E.H. Immergut, Polymer Handbook, 2nd ed., John Wiley & Sons, New York, pp 139-192 (1975).

In an even more preferred embodiment of this invention the monomer mixture consists essentially of methyl methacrylate, butyl acrylate and ethyl acrylate; most preferably methyl methacrylate and butyl acrylate. Small amounts (for example less than 12 weight percent total) of additional monomers, as described under component d), can be included for the purpose of special property enhancement.

Preferably the polymerization process of this invention is carried out in the presence of a solvent medium containing about 60% or more by weight of a straight-chain hydrocarbon having an average chain length of 8 to 18 carbon atoms. Preferably the straight-chain hydrocarbon has an average chain length from 9 to 15 carbon atoms. The most preferred straight-chain hydrocarbons are nonane, decane, undecane, dodecane, tridecane, tetradecane, pentadecane, hexadecane, heptadecane, and octadecane. The solvent medium may consist of a straight-chain hydrocarbon as described above or a mixture of two or more of such hydrocarbons. The solvent medium may also contain up to about 40% by weight of common organic solvents known in the art and used in non-aqueous dispersions, such as for example hexanes and xylenes.

Another feature of this invention is the use of an amphipathic dispersant or dispersant precursor in carrying out the polymerization of the dispersed polymer. Amphipathic dispersants are those having a combination of non-polar and polar groups, such as are conventionally employed in non-aqueous dispersion polymerization procedures and described in Barrett, Dispersion Polymerization in Organic Media, John Wiley & Sons (1975). "Amphipathic dispersants" as used herein also includes dispersant precursors, such as an oil soluble oligomer or polymer which becomes grafted to the NAD polymer during polymerization, which are also described in Barrett. Suitable amphipathic dispersants and levels thereof are further described in GB-A-941,305; GB-A-1,052,241; GB-A-1,122,397; GB-A-1,231,614 and GB-A-1,269,964; US-A-3,514,500; US-A-4,115,472 and US-A-4,206,099. The amphipathic dispersant is preferably comprised of soluble, non-polar chains attached to an insoluble, polar backbone. Most preferably the amphipathic dispersant or dispersant precursor is a derivative of poly(12-hydroxystearic acid).

The present invention yields non-aqueous polymer dispersion compositions which have high metal adhesion, as well as high durability when compared to typical NAD's known in the art. The dispersed polymer from this invention preferably has a weight average molecular weight of about 50,000 or greater and an average particle size by volume less than about 450 nanometers as measure using Nanosizer (Coulter Electronics Ltd.).

The following Examples further illustrate this invention. All parts and percentages given in the Examples are by weight unless otherwise indicated.

The following abbreviations are used in the Examples:

AA = Acrylic Acid

AOPA =

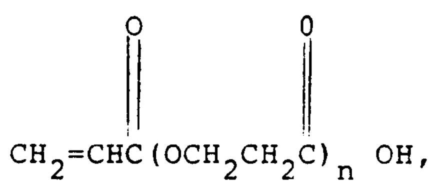

where the average value of n is 1.57 unless otherwise indicated

BA = Butyl Acrylate

MAA = Methacrylic Acid

MMA = Methyl Methacrylate

MIPAP = Methacryloxyisopropyl acid phthalate

## EXAMPLE I

### Preparation of Amphipathic Dispersant

An amphipathic dispersant was prepared in a 3-step process for use in the following Examples consisting of 50 parts p(12-hydroxystearic acid)/glycidyl methacrylate adduct, 49 parts methyl methacrylate, and 1 part methacrylic acid.

In step 1, 200 grams of xylene were added to a 5 litre 4 NRB flask equipped with mechanical stirrer, Dean-Stark trap, condenser, thermometer and maintained under a positive pressure of nitrogen. The flask was warmed to 90 °C while stirring. 200 grams of 12-hydroxystearic acid (12-HSA) were added slowly over approximately 30 minutes while maintaining a temperature between 85-90 °C. Next, 1.0 grams of 98% methane sulfonic acid (MSA) was added and the reactants heated to 190-195 °C. After maintaining the reactants at 190-195 °C for about 6 hours, approximately 85ml of water were recovered. Then 0.375 grams of MSA were added and the reaction continued until titration with 0.5N KOH in methanol gave a value of 0.65-0.75 meg. acid/gram.

In step 2, 1900 grams of the poly(12-HSA) prepared in step 1, 253.3 grams of glycidyl methacrylate (GMA), 1.90 grams of hydroquinone, 5.43 grams of dimethyllauryl amine, and 1,470.6 grams of xylene were added to a 5 litre 4 NRB flask equipped with a mehcanical stirrer and thermometer and heated to 145 °C. Acid consumption was monitored every 2 hours by titration with 0.5N KOH in methanol. After 6 hours the titration showed less than 0.009 meg/gram of acid. The reactants were then cooled to room temperature.

In step 3, 467.3 grams of ethyl acetate and 233.3 grams of butyl acetate were added to a 5-litre 4 NRB flask as described in step 2. The flask was sparged with nitrogen for about 5 minutes while stirring and then maintained under a positive pressure of nitrogen. The reactants were then warmed to 83-85 °C. A monomer feed consisting of 1300 grams of poly(12-HSA)/GMA prepared in step 2, 686 grams of methyl methacrylate (MMA), and 14 grams of methacrylic acid (MAA) was added at a rate of 800 ml/hour. At the same time an initiator co-feed consisting of 28 grams of azo initiator (Vazo-67 available from DuPont Co.), 30 grams ethyl acetate, and 15 grams of butyl acetate were added at a rate of 24 ml/hour. The total addition of the feeds took 3 hours, during which time the temperature gradually rose to 103-105 °C. After maintaining the reactants at 103-105 °C for an additional 2 hours, the heat was removed and 1221 grams naphthol spirits (mixture of aliphatic hydrocarbons from Union Oil co.) were added while stirring.

EXAMPLE II

Preparation of NAD Containing AOPA

To a 2-litre 4 NRB flask fitted with solvent recycle condenser, mechanical stirrer, thermometer, and adapter for the introduction of initiator is added Flask Charge A consisting of 21.4 grams MMA, 0.3 grams MAA, 1.11 grams t-butyl peroctoate, 10.0 grams of poly(12-HSA-GMA/MMA/MAA) dispersant from Ex. I, 150.1 grams hexane and 244.9 grams of straight-chain hydrocarbon solvent having an average chain length of 12 carbons (Norpar-12 available from Exxon Chemical Co.). The flask was sparged with nitrogen for 10 minutes and then maintained under positive pressure with nitrogen. The reactants were heated to reflux at a temperature of 95-98 °C. After initial whitening of the reactants, the reflux temperature was maintained for 20 minutes and Monomer Feed No. 1 [consisting of 70.1 g. BA 159.6 g. MMA, 9.6 g. AOPA, and 66 g. of p-(12-HSA-GMA/MMA/MAA) dispersant from Ex. I] was added through the recycle condenser at 100 ml/hour. At the same time Initiator Co-feed (consisting of 1.11 g. t-butyl peroctoate, 3.8g. hexane and 6.2g of $C_{12}$ straight-chain hydrocarbon solvent) was added at a rate of 4 ml/hour. After 30 minutes, the feed rate for Monomer Feed No. 1 was increased to 200 ml/hour. After addition of Monomer Feed No. 1 was complete, Monomer Feed No. 2 (consisting of 70.1 g. BA, 159.6 g. MMA and 9.6 g. AOPA) was added. Subsequently a Final Charge B (consisting of 4.44 g. t-butyl peroctoate, 30.04 g. hexane and 4.96 g. $C_{12}$ straight-chain hydrocarbon solvent) was added over 30 minutes. The reflux temperature was maintained for an additional 30 minutes and the reactants were then cooled to room temperature while stirring. The final composition was a non-aqueous dispersion within the scope of this invention and having a glass transition temperature of about 35 °C as calculated by the Fox equation, an average particle size by volume of 308 nanometers, and total solids of 62.5% by weight.

EXAMPLES III-VIII

Preparation of NAD's Having Varying Amounts of AOPA

Following the procedures from Examples II, various NAD's were prepared according to this invention having varying amounts of AOPA. In each Example, the appropriate monomers and solvents were used in the Flask Charge A, Monomer Feed No. 1, Monomer Feed No. 2, Initiator Co-feed and final Charge B to yield final NAD compositions as shown in Table I.

## TABLE I

| Example | COMPOSITION (parts by weight) | | | Particle Size (nm) | Calculated Tg (°C)* |
|---|---|---|---|---|---|
| | BA | MMA | AOPA | | |
| III | 31.0 | 68.5 | 0.5 | 372 | 35 |
| IV | 31.8 | 66.2 | 2.0 | 390 | 32 |
| V | 30.1 | 63.9 | 6.0 | 338 | 32 |
| VI | 29.2 | 62.8 | 8.0 | 290 | 32 |
| VII | 28.3 | 61.7 | 10.0 | 331 | 32 |
| VIII | 31.0 | 65.0 | 4.0[(a)] | 326 | 32 |

(a) contains an average of 2.26 oxypropionic units per molecule.

* calculated by the Fox equation

EXAMPLES IX - XIV (Comparative)

Following the procedures from Example II, various NAD's falling outside the scope of this invention were prepared using other carboxylic acid monomers instead of AOPA. In each Example, the appropriate monomers and solvents were used in the Flask Charge A, Monomer Feed No. 1, Monomer Feed No. 2, Initiator Cofeed and Final Charge B to yield final NAD compositions as shown in Table II.

TABLE II

| COMPOSITION (part by weight) | | | | | |
|---|---|---|---|---|---|
| Example | BA | MMA | MAA | AA | MIPAP |
| IX | 31.5 | 67.0 | 1.5 | -- | -- |
| X | 31.6 | 66.1 | 2.3 | -- | -- |
| XI | 32.7 | 65.3 | -- | 2.0 | -- |
| XII | 32.7 | 63.3 | -- | 4.0 | -- |
| XIII | 32.7 | 61.3 | -- | 6.0 | -- |
| XIV | 31.0 | 65.0 | -- | -- | 4.0 |

## EXAMPLE XV

### Adhesion Testing

Using the NAD's prepared in Example II through XIV, clear coatings and pigmented paints were prepared and tested for cross-hatch adhesion following ASTM standard Testing Method D 3359-83.

In preparing the clear coatings, 18.8 grams of butyl carbitol (union Carbide Co.) and 9.9 grams of Naphthol Spirits (mixture of aliphatic hydrocarbons from Union Oil Co.) were added while stirring to 100 g. of the NAD composition.

In preparing the pigmented paints, a pigment grind was made using 600 parts of rutile $TiO_2$, 53.3 parts of dispersant prepared in Ex. I, and 149.2 parts of Naphthol Spirits. The pigment grind was then let down using 100 parts of pigment grind, 278.1 parts of NAD composition, 52.1 parts butyl Carbitol, and 11.6 parts Naphthol Spirits.

Films of the clear coatings and the pigmented paints were cast on test panels of treated steel (Bonderite 1000 from Hooker Chemical and Plastics Corp.) and untreated cold-rolled steel. The films were dried to a 2.54 - 3.81 x $10^{-3}$cm (1.0-1.5 mil) thickness at ambient temperature for 1 day and tested for adhesion following ASTM std. test method D 3359-83. The results are given in Table III and reported as the percent of the dried film which is removed from the substrate.

TABLE III

| NAD Composition | CLEAR COATING | | CROSS-HATCH ADHESION (% removed) PIGMENTED PAINT | |
|---|---|---|---|---|
| | Cold-Rolled Steel | Bonderite-1000 | Cold-Rolled Steel | Bonderite-1000 |
| Ex II | 3 | 0 | 80 | 0 |
| Ex III | 100 | 100 | 100 | 10 |
| Ex IV | 85 | 0 | 100 | 1 |
| Ex V | 0 | 0 | 15 | 0 |
| Ex VI | 0 | 0 | 2 | 0 |
| Ex VII | 0 | 0 | 2 | 0 |
| Ex VIII | 0 | 0 | 5 | 0 |
| Ex IX | 100 | 100 | 100 | 100 |
| Ex X | 100 | 100 | 100 | 100 |
| Ex XI | 100 | 100 | 100 | 95 |
| Ex XII | 100 | 100 | 100 | 20 |
| Ex XIII | 100 | 100 | 100 | 0 |
| Ex XIV | 100 | 100 | 100 | 2 |

The results in Table III demonstrate that non-aqueous dispersions containing AOPA increase adhesion of both pigmented and unpigmented films on treated and untreated metallic substrates.

## Claims

1. A method of preparing a non-aqueous polymeric dispersion comprising a dispersion-polymerized copolymer of ethylenically-unsaturated monomer(s) containing copolymerized therein at least 0.5 percent, preferably from 0.5 to 10 percent, by weight of said copolymer, of one or more adhesion promoter(s), said adhesion promoter(s) having the chemical formula:

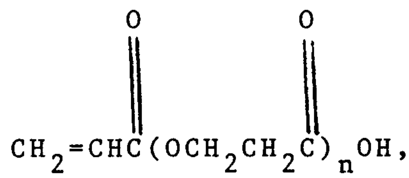

wherein n is from 1 to 6, comprising polymerising the monomer mixture of the ethylenically unsaturated monomer(s) and the adhesion promoter(s) in the presence of an amphipathic dispersant or dispersant precursor and in the presence of a solvent medium containing one or more straight-chain hydrocarbons having an average chain length of 8 to 18 carbon atoms.

2. A method according to claim 1 wherein the ethylenically-unsaturated monomer(s) comprise a) from 75 to 100 weight percent of one or more monomers of methyl methacrylate, ethyl methacrylate, propyl methacrylate, butyl methacrylate, isobutyl methacrylate, ethyl acrylate, butyl acrylate, isobutyl acrylate, vinyl acetate, vinyl chloride, vinylidene chloride, acrylonitrile, and methacrylonitrile and b) from 0 or up to 25 weight percent of one or more monomers of styrene, alpha-methyl styrene, vinyl toluene, 2-ethylhexyl acrylate, 2-ethylhexyl methacrylate, isodecyl acrylate, isodecyl methacrylate, lauryl acrylate, and lauryl methacrylate.

3. A method according to claim 1 or claim 2, wherein the copolymer is polymerized from a mixture of monomers containing a) at least 40 weight percent of one or more $C_1$-$C_3$ alkyl methacrylate monomer(s); b) at least 10 weight percent of one or more comonomer(s) of butyl acrylate, isobutyl acrylate, butyl methacrylate, isobutyl methacrylate, and 2-ethylhexyl acrylate; c) 0.5 to 10 weight percent of said adhesion promoter(s); and d) 0 or up to 50 weight percent of other ethylenically-unsaturated monomers.

4. A method according to any one of the preceding claims, wherein the copolymer has a glass transition temperature of from 0 to 70 °C as calculated by the Fox equation and an average particle size by volume no more than 450 nanometers.

5. A method according to any one of the preceding claims, wherein the copolymer has a weight average molecular weight of at least 50,000.

6. A method according to any one of the preceding claims wherein the amphipathic dispersant or dispersant precursor is a derivative of poly(12-hydroxystearic acid).

7. A method according to any one of the preceding claims wherein the solvent medium contains at least 60% by weight of one or more straight-chain hydrocarbons having an average chain length of 8 to 18 carbon atoms.

8. A method according to any preceding claim, wherein the straight-chain hydrocarbon is one or more of nonane, decane, undecane, dodecane, tridecane, tetradecane, pentadecane, hexadecane, heptadecane and octadecane.

9. Use of a dispersion produced by a method according to any one of the preceding claims in or as a coating or adhesive composition.

## Patentansprüche

1. Verfahren zur Herstellung einer nicht-wässerigen, polymeren Dispersion, umfassend ein dispersionspolymerisiertes Copolymer von ethylenisch-ungesättigtem(n) Monomer(en), enthaltend darin copolymerisiert mindestens 0,5 Gew.-%, vorzugsweise 0,5 - 10 Gew.-%, des Copolymers, und ein oder mehr Adhäsions, wobei der (die) Adhäsionspromotor(en) die chemische Formel

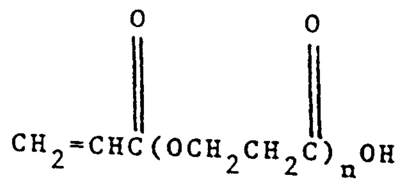

haben, worin n 1 bis 6 ist, bei dem man das Monomergemisch des (der) ethylenisch-ungesättigten Monomer(s)(en) und den (die) Adhäsionspromotor(en) in Gegenwart eines amphipathischen Dispersionsmittels oder Dispersionsmittelvorläufers und in Gegenwart eines Lösungsmittelmediums polymerisiert, das ein oder mehr geradkettige Kohlenwasserstoffe mit einer Durchschnittskettenlänge von 8 - 18 C-Atomen enthält.

2. Verfahren nach Anspruch 1, worin das (die) ethylenischungesättigte(n) Monomer(en) (a) 75 - 100 Gew.-% von ein oder mehr Monomeren von Methylmethacrylat, Ethylmethacrylat, Propylmethacrylat, Butylmethacrylat, Isobutylmethacrylat, Ethylacrylat, Butylacrylat, Isobutylacrylat, Vinylacetat, Vinylchlorid, Vinylidenchlorid, Acrylonitril und Methacrylonitril und (b) 0 bis zu 25 Gew.-% von ein oder mehr Monomeren von Styrol, alpha-Methylstyrol, Vinyltoluol, 2-Ethylhexylacrylat, 2-Ethylhexylmethacrylat, Isodecylacrylat, Isodecylmethacrylat, Laurylacrylat und Laurylmethacrylat umfaßt(umfassen).

3. Verfahren nach Anspruch 1 oder 2, worin das Copolymer von einem Gemisch von Monomeren polymerisiert wird, enthaltend (a) mindestens 40 Gew.-% von ein oder mehr $C_1$-$C_3$ Alkylmethacrylatmonomeren, (b) mindestens 10 Gew.-% von ein oder mehr Comonomeren von Butylacrylat, Isobutylacrylat, Butylmethacrylat, Isobutylmethacrylat und 2-Ethylhexylacrylat, (c) 0,5 bis 10 Gew.-% des (der) Adhäsionspromotor(s)(en) und (d) 0 bis zu 50 Gew.-% weitere ethylenisch-ungesättigte Monomere.

4. Verfahren nach einem der vorhergehenden Ansprüche, worin das Copolymer eine Glasumwandlungstemperatur von 0 °C - 70 °C, berechnet durch die Fox-Gleichung, und eine Volumen-Durchschnittspartikelgröße von nicht mehr als 450 nm hat.

5. Verfahren nach einem der vorhergehenden Ansprüche, worin das Copolymer ein Gewicht-Durchschnittsmolekulargewicht von mindestens 50 000 hat.

6. Verfahren nach einem der vorhergehenden Ansprüche, worin das amphipathische Dispersionsmittel oder der Dispersionsmittelvorläufer ein Derivat von Poly(12)-hydroxystearinsäure) ist.

7. Verfahren nach einem der vorhergehenden Ansprüche, worin das Lösungsmittelmedium mindestens 60 % von ein oder mehr geradkettigen Kohlenwasserstoffen mit einer Durchschnittskettenlänge von 8 - 18 C-Atomen enthält.

8. Verfahren nach einem der vorhergehenden Ansprüche, worin der geradkettige Kohlenwasserstoff ein oder mehr von Nonan, Decan, Undecan, Dodecan, Tridecan, Tetradecan, Pentadecan, Hexadecan, Heptadecan und Octadecan ist.

9. Verwendung einer nach einem Verfahren nach einem der vorhergehenden Ansprüche hergestellten Dispersion als Beschichtungs- oder Klebstoffzusammensetzung.

## Revendications

1. Procédé de préparation d'une dispersion polymère non aqueuse comprenant un copolymère polymérisé par dispersion d'un ou de plusieurs monomères à insaturation éthylénique, dans laquelle est copolymérisé au moins 0,5%, de préférence de 0,5 à 10%, en poids dudit copolymère, d'un ou plusieurs promoteurs d'adhérence, le(s)dit(s) promoteur(s) d'adhérence possédant la formule chimique :

$$CH_2{=}CH\overset{\overset{O}{\|}}{C}(OCH_2CH_2\overset{\overset{O}{\|}}{C})_nOH,$$

dans laquelle n a une valeur de 1 à 6, comprenant la polymérisation du mélange monomère du ou des monomères à insaturation éthylénique et du ou des promoteurs d'adhérence, en présence d'un dispersant amphipathique ou d'un précurseur de dispersant et en présence d'un milieu solvant contenant un ou plusieurs hydrocarbures à chaîne droite possédant une longueur de chaîne moyenne de 8 à 18 atomes de carbone.

2. Procédé selon la revendication 1, dans lequel le ou les monomères à insaturation éthylénique comprennent a) de 75 à 100% en poids d'un ou plusieurs monomères parmi le méthacrylate de méthyle, le méthacrylate d'éthyle, le méthacrylate de propyle, le méthacrylate de butyle, le méthacrylate d'isobutyle, l'acrylate d'éthyle, l'acrylate de butyle, l'acrylate d'isobutyle, l'acétate de vinyle, le chlorure de vinyle, le chlorure de vinylidène, l'acrylonitrile et le méthacrylonitrile, et b) de 0 ou jusqu'à 25% en poids d'un ou plusieurs monomères parmi le styrène, l'α-méthylstyrène, le vinyltoluène, l'acrylate de 2-éthylhexyle, le méthacrylate de 2-éthylhexyle, l'acrylate d'isodécyle, le méthacrylate d'isodécyle, l'acrylate de lauryle et le méthacrylate de lauryle.

3. Procédé selon la revendication 1 ou la revendication 2, dans lequel le copolymère est polymérisé à partir d'un mélange de monomères contenant a) au moins 40% en poids d'un ou plusieurs monomères méthacrylate d'alkyle en $C_1$-$C_3$; b) au moins 10% en poids d'un ou plusieurs comonomères d'acrylate de butyle, d'acrylate d'isobutyle, de méthacrylate de butyle, de méthacrylate d'isobutyle et d'acrylate de 2-éthylhexyle; c) 0,5 à 10% en poids dudit ou desdits promoteurs d'adhérence; et d) 0 ou jusqu'à 50% en poids d'autres monomères à insaturation éthylénique.

4. Procédé selon l'une quelconque des revendications précédentes, dans lequel le copolymère a une température de transition vitreuse de 0 à 70 °C, calculée par l'équation de Fox, et une granulométrie moyenne en volume d'au plus 450 nm.

5. Procédé selon l'une quelconque des revendications précédentes, dans lequel le copolymère a une masse moléculaire moyenne en poids d'au moins 50 000.

6. Procédé selon l'une quelconque des revendications précédentes, dans lequel le dispersant amphipathique ou le précurseur de dispersant est un dérivé de poly(acide 12-hydroxystéarique).

7. Procédé selon l'une quelconque des revendications précédentes, dans lequel le milieu solvant contient au moins 60% en poids d'un ou plusieurs hydrocarbures à chaîne droite ayant une longueur de chaîne moyenne de 8 à 18 atomes de carbone.

8. Procédé selon l'une quelconque des revendications précédentes, dans lequel l'hydrocarbure à chaîne droite est un ou plusieurs parmi le nonane, le décane, l'undécane, le dodécane, le tridécane, le tétradécane, le pentadécane, l'hexadécane, l'heptadécane et l'octadécane.

9. Utilisation d'une dispersion produite par un procédé selon l'une quelconque des revendications précédentes, dans un revêtement ou une composition adhésive, ou en tant que revêtement ou composition adhésive.